(19) Europäisches Patentamt
European Patent Office
Office européen des brevets

(11) **EP 4 579 202 B1**

(12) **EUROPEAN PATENT SPECIFICATION**

(45) Date of publication and mention
of the grant of the patent:
**20.05.2026 Bulletin 2026/21**

(21) Application number: **24157345.0**

(22) Date of filing: **13.02.2024**

(51) International Patent Classification (IPC):
*G01J 1/42 (2006.01)*    *H04B 10/58 (2013.01)*
*G02F 1/01 (2006.01)*    *G01J 9/02 (2006.01)*
*G01J 1/44 (2006.01)*    *H04B 10/073 (2013.01)*

(52) Cooperative Patent Classification (CPC):
**G01J 1/4257; G01J 9/0246; G02F 1/0121;
H04B 10/0731;** G01J 1/44; G01J 2001/446

(54) **METHOD AND SYSTEM FOR HIGH-SPEED AND HIGH-RESOLUTION LINEARIZED OPTICAL FREQUENCY DISCRIMINATOR**

VERFAHREN UND SYSTEM FÜR EINEN LINEARISIERTEN OPTISCHEN FREQUENZDISKRIMINATOR MIT HOHER GESCHWINDIGKEIT UND HOHER AUFLÖSUNG

PROCÉDÉ ET SYSTÈME POUR DISCRIMINATEUR DE FRÉQUENCE OPTIQUE LINÉARISÉ À HAUTE VITESSE ET HAUTE RÉSOLUTION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.12.2023 US 202318400445**

(43) Date of publication of application:
**02.07.2025 Bulletin 2025/27**

(73) Proprietor: **II-VI Delaware, Inc.
Wilmington, Delaware 19801 (US)**

(72) Inventors:
• **BHANDARE, Suhas
Chalfont, 18194 (US)**
• **PERDOMO, Jorge
Hamilton, 08690 (US)**

(74) Representative: **Forresters IP LLP
Skygarden
Erika-Mann-Straße 11
80636 München (DE)**

(56) References cited:
**CN-A- 113 376 923      US-A1- 2010 245 968
US-A1- 2021 211 202**

• **"Fibre optic communication system design
guidelines - Part 16: Coherent receivers and
transmitters with high-speed digital signal
processing", 10 May 2022 (2022-05-10), pages 1 -
119, XP082045490, Retrieved from the Internet
<URL:https://api.iec.ch/harmonized/
publications/download/2921198> [retrieved on
20220510]**

**Description**

BACKGROUND

1. Field

This disclosed subject matter relates generally to methods and systems for characterizing and measuring an output of a tunable narrow linewidth laser sources and, more particularly, to a method and system for characterizing them for their steady state and transient response using a linearized optical frequency discriminator that simultaneously have high speed and high resolution.

2. Description of Related Art

Many applications require laser sources that offer a narrow linewidth, a high degree of coherence, and low intrinsic optical phase noise. Examples of such applications of such laser sources are in coherent optical communications and spectroscopy. The linewidth of the laser determines the precision and accuracy of the laser's frequency stability over short-term and/or long-term time duration, and can have a significant impact on the performance of systems that use such laser sources.

Accordingly, it is important to capture and process laser frequency variation data of such laser sources in order to optimize the laser fabrication processes at the device level as well as design electronic circuits that drive such laser sources by measuring their steady state as well as transient response so as to provide feedback to laser fabrication and/or manufacturing and design processes. The subject matter of the present disclosure is directed to systems and methods for characterizing and measuring the laser frequency variations over different time windows of interest at the output of a narrow linewidth laser sources to optimize the response of the tunable narrow linewidth laser source to its electrical input(s).

Devices and methods of linearizing an output of an interferometer are described in US 2021/211202, US 2010/245968 and CN 113 376 923.

SUMMARY

According to non-limiting embodiments, provided is a method of linearizing an output of an interferometer. The method comprises: obtaining an optical signal from a laser at an input of the interferometer; converting, with a first photodiode connected to an optical through-port of the interferometer and a second photodiode connected to an optical cross-port of the interferometer, a detected optical intensity of the optical signal at the optical through-port and the optical cross-port into two photocurrents using self-homodyne detection at the output of the interferometer; providing the two photocurrents to a signal input and a reference input, respectively, of a logarithmic ratio amplifier to determine a logarithmic ratio of the two photocurrents; processing, by the logarithmic ratio amplifier, the logarithmic ratio by scaling the logarithmic ratio and introducing a DC output offset voltage to provide an output voltage; and compensating for the DC output offset voltage using a differential buffer amplifier operatively connected to the output of the logarithmic ratio amplifier to provide a DC output voltage that corresponds to a linearized output of the interferometer.

In some non-limiting embodiments, the interferometer may be a Mach-Zehnder delay interferometer. The DC output voltage may correspond to optical frequency changes above or below a nominal laser frequency of the laser. The laser may be a tunable narrow linewidth laser.

In other non-limiting embodiments, the method may further comprise: measuring the DC output voltage with a source-meter unit by tuning a thermo-optic phase tuner heater voltage of the interferometer. The method may also further include: determining an optimum quadrature bias point of the interferometer based on the measured DC output voltage. The method may further comprise: setting the thermo-optic phase tuner heater voltage to a value based on the optimum quadrature bias point of the interferometer; and remeasuring the DC output voltage to determine a frequency discrimination slope and offset of the linearized output of the interferometer.

In some non-limiting embodiments, the method may further comprise: measuring the DC output voltage with an oscilloscope to obtain trace data. A steady state or transient response of the laser may be determined based on a post-processing of the trace data.

According to other non-limiting embodiments, provided is a system for linearizing an output of an interferometer. The system comprises: an interferometer configured to obtain an optical signal from a laser at an input and provide a through-port optical signal to an optical through-port and a cross-port optical signal to an optical cross-port at the output of the interferometer; a first photodiode connected to the optical through-port of the interferometer and configured to convert the through-port optical signal to a first photocurrent; a second photodiode connected to the optical cross-port of the interferometer and configured to convert the cross-port optical signal to a second photocurrent; a logarithmic ratio amplifier comprising a signal input connected to the first photodiode and configured to receive the first photocurrent, a reference input connected to the second photodiode and configured to receive the second photocurrent, and an output, the logarithmic ratio amplifier configured to determine a logarithmic ratio of the first photocurrent and the second photocurrent and process the logarithmic ratio by scaling the logarithmic ratio and introducing a DC output offset voltage to provide an output voltage at the output; and a differential buffer amplifier connected to the output of the logarithmic ratio amplifier and configured to compensate for the DC output offset voltage to provide a DC output voltage that corresponds to a linearized output of the interferometer.

In some non-limiting embodiments, the interferometer may be a Mach-Zehnder delay interferometer. The DC output voltage may correspond to optical frequency changes above or below a nominal laser frequency of the laser. The laser may be a tunable narrow linewidth laser.

In other non-limiting embodiments, the system may further include a source-meter unit operatively connected to the output of differential buffer amplifier and a thermo-optic phase tuner heater of the interferometer and configured to measure the DC output voltage by tuning a thermo-optic phase tuner heater voltage provided to the thermo-optic phase tuner heater sourced by the source-meter unit. The source-meter unit may be configured to determine an optimum quadrature bias point of the interferometer based on the measured DC output voltage. The source-meter unit may be configured to set the thermo-optic phase tuner heater voltage to a value based on the optimum quadrature bias point of the interferometer. The system may be calibrated to determine a slope in V/GHz and an offset in V based on the optimum quadrature bias point of the interferometer.

In still further non-limiting embodiments, an oscilloscope may be provided at an output of the differential buffer amplifier to measure the DC output voltage and obtain trace data. A processor may be associated with the oscilloscope and configured to determine at least one of a steady state response or a transient response of the laser based on the trace data. In a non-limiting embodiment, the system may be provided as a pluggable optical module configured to be positioned between the laser and an oscilloscope.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter. As used in the specification and the claims, the singular forms of "a," "an," and "the" include plural referents unless the context clearly dictates otherwise.

BRIEF DESCRIPTION OF THE DRAWINGS

Additional advantages and details of the disclosed subject matter are explained in greater detail below with reference to the exemplary embodiments that are illustrated in the accompanying figures, in which:

FIG. 1A is block diagram of an optical frequency discriminator in accordance with the present disclosure;

FIG. 1B is a block diagram of an optical frequency discriminator in accordance with another non-limiting embodiment of the present disclosure

FIG. 2 is a graph illustrating a nonlinear and normalized intensity transfer function in through-port and cross-port outputs of an interferometer of the optical frequency discriminator of FIGS. 1A and 1B expressed in decibel scale versus a fine tune frequency of the laser;

FIG. 3 is a schematic circuit diagram of a logarithmic ratio amplifier of the optical frequency discriminator of FIGS. 1A and 1B;

FIG. 4 is a graph illustrating a linearized intensity transfer function of the interferometer of the optical frequency discriminator of FIGS. 1A and 1B versus a phase tuner heater voltage of the interferometer;

FIG. 5A is a graph of a theoretically calculated linearized intensity transfer function of the interferometer using a logarithmic ratio of its two output port intensities in accordance with the present disclosure and FIG. 5B is a graph of a measured linearized intensity transfer function of the interferometer using a logarithmic ratio of its two output port intensities in accordance with the present disclosure;

FIG. 6A is oscilloscope trace data of a measured voltage versus time of a laser frequency variation in steady state at an output of the optical frequency discriminator of FIGS. 1A and 1B and FIG. 6B is a calculated root-mean-square frequency deviation histogram of the nominal frequency of the laser in steady state operation;

FIG. 7A is oscilloscope trace data of a measured voltage versus time of laser frequency variation in a transient state at an output of the optical frequency discriminator of FIGS. 1A and 1B when a sub-millisecond risetime step in laser frequency was introduced in the laser and FIG. 7B is a calculated laser's transient frequency variation versus time using the transfer function of FIG. 5B from the measured oscilloscope trace data of voltage versus time of FIG. 7A.

DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments of the disclosed subject matter. Hence, specific dimensions and other physical characteristics related to the embodiments disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Where only one item is intended, the term "one" or similar language is used. Also, as used herein, the terms "has," "have," "having," or the like are intended to be openended terms. Further, the phrase "based on" is intended to mean "based at least partially on" unless explicitly stated otherwise.

Some non-limiting embodiments are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

The present disclosure is directed to a system as well as method for linearizing an output of an interferometer which acts as an optical frequency discriminator that converts laser frequency variations into optical intensity variations. The system comprises: an interferometer configured to obtain an optical signal from a laser at an input of the interferometer and provide a through-port optical intensity signal to an optical through-port output of the interferometer and a cross-port optical intensity signal to an optical cross-port output of the interferometer; a first photodiode connected to the optical through-port of the interferometer and configured to convert the through-port optical intensity signal to a first photocurrent; a second photodiode connected to the optical cross-port of the interferometer and configured to convert the cross-port optical intensity signal to a second photocurrent; and a logarithmic ratio amplifier comprising a signal input connected to the first photodiode and configured to receive the first photocurrent, a reference input connected to the second photodiode and configured to receive the second photocurrent, and an output. The logarithmic ratio amplifier is configured to determine a logarithmic ratio of the first photocurrent and the second photocurrent and process the logarithmic ratio by scaling the logarithmic ratio and introducing a DC output offset voltage to represent bipolar logarithmic ratio of two DC photocurrents that corresponds to positive and negative laser frequency variations around the nominal laser frequency at the output of the logarithmic ratio amplifier. The system further comprises a differential buffer amplifier connected to the output of the logarithmic ratio amplifier and configured to compensate for the DC output offset voltage introduced by the logarithmic ratio amplifier to provide a linearized DC output voltage that corresponds to positive or negative frequency variations around the nominal laser frequency at the output of the interferometer acting as high resolution optical frequency discriminator with high speed.

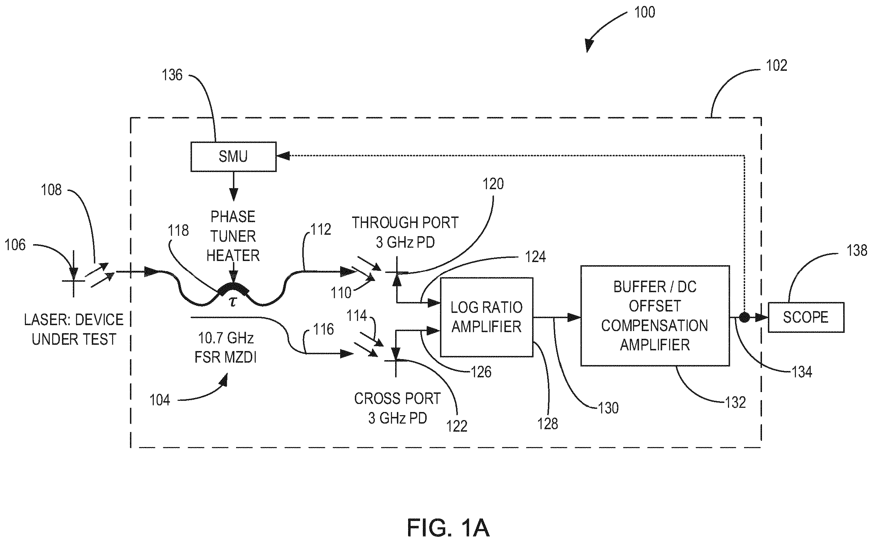

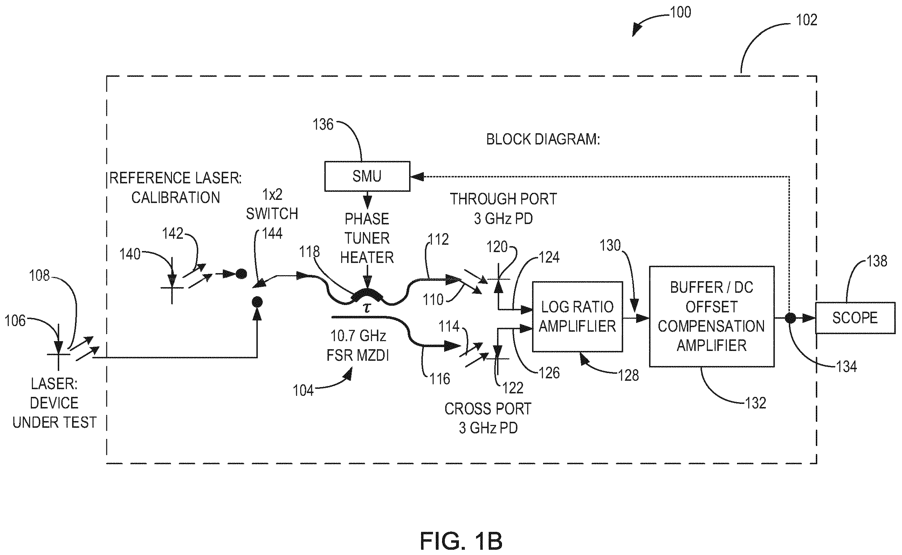

With reference to FIG. 1A, the system of the present disclosure is configured to down convert the laser frequency variations from passband (i.e., optical domain) to baseband (i.e., electrical domain) using delayed self-homodyne detection with an interferometer. In one non-limiting embodiment the interferometer may be an Optoplex thermally tunable 10.7 GHz free spectral range (FSR) Mach-Zehnder delay interferometer (MZDI). However, this is not to be construed as limiting the present disclosure as any suitable interferometer having different free spectral ranges may be utilized. As shown in FIG. 1A, the system 100 comprises an optical frequency discriminator 102 comprising the MZDI 104. The laser under test 106 provides an optical signal 108 at an input of the MZDI 104 and provides a through-port optical signal 110 to an optical through-port 112 and a cross-port optical signal 114 to an optical cross-port 116. The optical through-port 112 has a differential optical path length delay of $\tau$ corresponding to 1/FSR of the MZDI 104. In an alternative non-limiting embodiment as shown in FIG. 1B, the system may be provided with a reference laser 140 that provides for a calibrating optical signal 142 to the input of the MZDI 104. This reference laser 140 allows the system to be calibrated prior to evaluating the laser under test 106. A 1X2 opto-mechanical switch 144 may be provided between the outputs of the reference laser 140 and the laser under test 106 and the input of the MZDI 104 to allow for switching between the reference laser 144 and the laser under test 106. The remaining components of the system of FIG. 1B are identical to those of FIG. 1A so reference will only be made to FIG. 1A hereinafter.

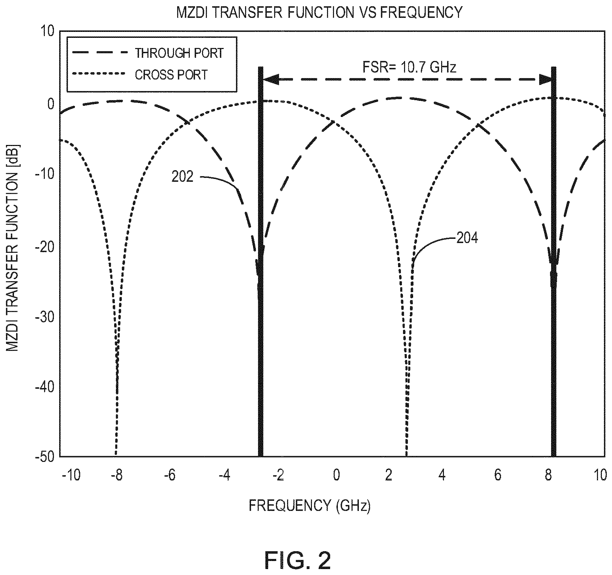

With reference to FIG. 2 and with continuing reference to FIG. 1A, an optical intensity transfer function 202 in the through-port 112 and the intensity transfer function 204 in the cross-port 116 of the MZDI 104 are nonlinear functions of the input optical frequency given by the following set of equations:

$$\text{MZDI Through Port Transfer Function: } \frac{1}{2} \cdot \left( 1 + \cos\left( 2\pi\Delta f_o \tau - \frac{\pi}{2} \right) \right)$$

$$\text{MZDI Cross Port Transfer Function: } \frac{1}{2} \cdot \left( 1 - \cos\left( 2\pi\Delta f_o \tau - \frac{\pi}{2} \right) \right)$$

The intensity transfer functions in through-port and cross-port of the MZDI which are in turn functions of the input optical frequency are raised co-sinusoidal functions which are non-linear in nature and require infinitely high dynamic range to measure them in first place.

The $2\pi f_o \tau$ is set to $-\pi/2$ rad to bias the MZDI to a quadrature phase using a thermo-optic phase tuning heater element 118 (see FIG. 1A) integrated into MZDI 104 so that MZDI 104 will have a positive slope in its linearized intensity transfer function. The optical frequency $f_o$ is the nominal optical frequency in THz and the differential delay $\tau$ is equal to 1/FSR of the MZDI 104 in ps. In one non-limiting example, the differential delay $\tau$ is 93.458 ps for a MZDI 104 having an FSR of 10.7 GHz. $\Delta f_o$ is the change in the nominal optical frequency in sub-GHz range in the laser under test 106 lasing in a THz frequency region.

Returning to FIG. 1A, the optical frequency discriminator 102 further comprises a first photodiode 120 connected to the optical through-port 112 of the MZDI 104 and a second photodiode 122 connected to the optical cross-port 116 of the MZDI 104. In one non-limiting embodiment, the first and second photodiodes 120, 122 are 3.0 GHz photodiodes. The first photodiode 120 is configured to convert the through-port optical intensity signal 110 to a first photocurrent 124 and the second photodiode 122 is configured to convert the cross-port optical intensity signal 114 to a second photocurrent 126.

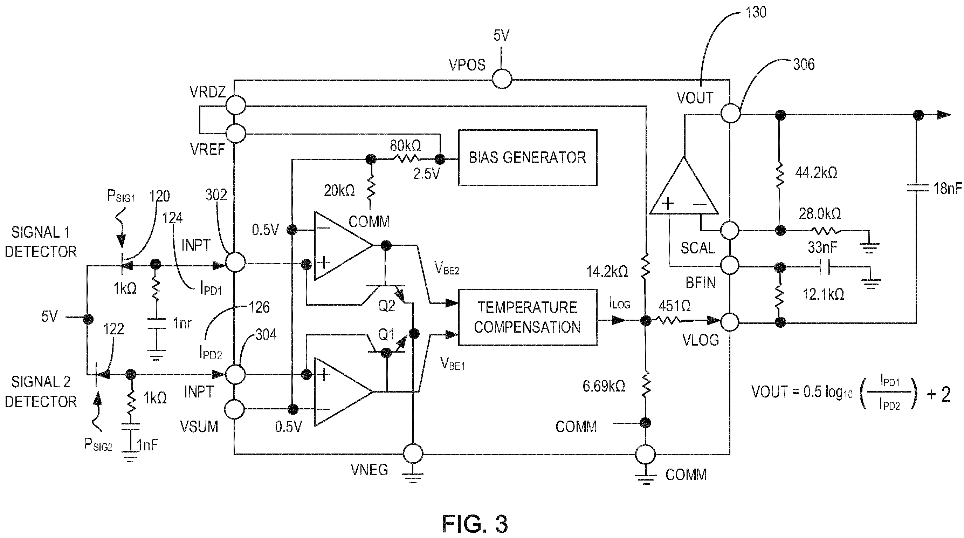

The optical frequency discriminator 102 further comprises a logarithmic ratio amplifier 128 comprising a signal input 302 (see FIG. 3) connected to the first photodiode 120 and configured to receive the first photocurrent 124, a reference input 304 (see FIG. 3) connected to the second photodiode 122 and configured to receive the second photocurrent 126, and an output 306 (see FIG. 3). The logarithmic ratio amplifier 128 is configured to determine a logarithmic ratio of the first photocurrent 124 and the second photocurrent 126 and process the logarithmic ratio by scaling the logarithmic ratio and introducing a DC output offset voltage to provide an output voltage 130 at the output 306 so that logarithmic ratios for laser frequency variations which are above, and below nominal laser frequencies are measured and represented correctly.

With reference to FIG. 3 and with continuing reference to FIG. 1A, the logarithmic ratio amplifier, in one non-limiting embodiment, may be an Analog Devices AD8305 logarithmic converter. The logarithmic ratio amplifier 128 is used to compute the ratio of the two output port intensities 110, 114 of the MZDI 104 detected by connecting the first and second photodiodes 120, 122 to the optical through-port 112 and cross-port 116 of the MZDI 104. In one non-limiting embodiment, the first and second photodiodes 120, 122 each have responsivities close to 1 A/W at 1550 nm and are configured to convert the detected optical intensities in the through and cross ports 112, 116 of the MZDI 104 into the two photocurrents 124, 126 having DC and AC frequency components. The output photocurrents 124, 126 of the first and second photodiodes 120, 122 are connected to signal input 302 and reference input 304 of the logarithmic ratio amplifier 128, respectively, as shown in FIG. 3 to compute their ratio electronically in continuous time domain. The analog signal processing performed by the logarithmic ratio amplifier 128 scales the logarithmic ratio by a scaling factor of 0.5, for example, and introduces a DC output offset voltage of 2 V at its output in an input-output transfer function so that negative logarithmic ratios below 2 V and positive logarithmic ratios above 2 V can be represented by the following equation:

$$V_{OUT} = 0.5 \log\left( \frac{I_{PD1}}{I_{PD2}} \right) + 2$$

Where $V_{OUT}$ is the output voltage 130 of the logarithmic ratio amplifier 128, $I_{PD1}$ is the first photocurrent 124, and $I_{PD2}$ is the second photocurrent 126. The output of the logarithmic ratio amplifier 128 represents a unipolar logarithmic ratio of two DC photocurrents that corresponds to positive and negative laser frequency variations around the nominal laser frequency.

Returning to FIG. 1A, the optical frequency discriminator 102 further comprises a differential buffer amplifier 132 connected to the output 306 of the logarithmic ratio amplifier 128 and configured to compensate for the +2 V DC output offset voltage to provide a DC output voltage 134 that corresponds to a linearized output of the MZDI 104. In one non-limiting embodiment, the differential buffer amplifier 132 in an Analog Devices AD8510 precision operational amplifier. The differential buffer amplifier 132 precisely compensates the +2 V DC output offset voltage introduced by the logarithmic ratio amplifier 128 and drives an oscilloscope input without directly loading the logarithmic ratio amplifier's time varying DC output voltage 130. A positive DC output voltage corresponds to positive optical frequency changes which are above the nominal laser frequency in THz while a negative DC output voltage corresponds to negative optical frequency changes which are below the nominal laser frequency in THz with positive frequency-to-voltage conversion slope of 0.336 in V/GHz. Accordingly, this linearized DC output voltage 130 corresponds to positive or negative frequency variations around the nominal laser frequency at the output of interferometer acting as a high resolution optical frequency discriminator with high speed.

In certain non-limiting embodiments, the optical frequency discriminator 102 may further include a source-meter unit (SMU) 136 operatively connected to the output of differential buffer amplifier 132 and the thermo-optic phase tuner heater 118 of the MZDI 104. The SMU 136 may be configured to measure the DC output voltage 134 by tuning a thermo-optic phase tuner heater voltage source by the SMU 136 to the thermo-optic phase tuner heater 118. The SMU 136 may be further configured to determine an optimum quadrature bias point of the MZDI 104 based on the measured DC output voltage 134 and set the thermo-optic phase tuner heater voltage to a value based on the optimum quadrature bias point of the MZDI 104 to act as an optical frequency discriminator having a positive slope in its input-output transfer function.

More specifically, the DC output voltage 134, which corresponds to the MZDI's linearized intensity transfer function, is measured using the SMU 136 by tuning the thermo-optic phase tuner heater voltage of the MZDI in steps of 10 mV sourced by the SMU 136 for a fixed nominal optical frequency $f_o$ to seek the optimum quadrature bias point of the MZDI 104. This allows the optical frequency discriminator 102 to have a "positive" slope in V/GHz. In one non-limiting embodiment, the SMU may be a Keithley 2400 source-meter-unit (SMU). The optimum quadrature bias point for a given nominal optical frequency $f_o$ is directly chosen as a function of the thermo-optic phase tuner heater voltage.

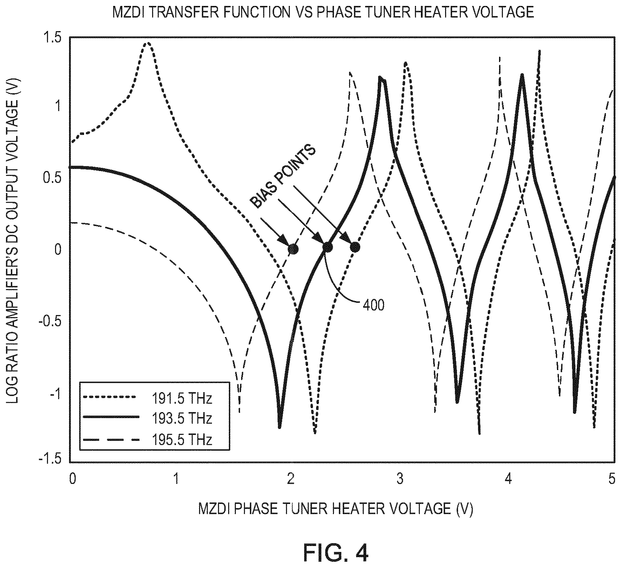

FIG. 4 is a graph of the linearized transfer function of the MZDI 104 versus the thermo-optic phase tuner heater voltage sourced by the SMU 136 to the thermo-optic phase tuner heater 118. The optimum quadrature bias point 400 is typically found out to be the second null voltage of approximately 0 V or within $\pm 10$ mV in the linearized intensity transfer function of the MZDI 104 as the MZDI have positive slope in its linearized input-output transfer function when biased at the second null voltage at the output of the buffer amplifier for laser frequencies across the optical C-band. As shown in Figure 4, the DC output voltage 134, which is the output voltage 130 of the logarithmic ratio amplifier 128 after having been buffered and DC output offset voltage compensated by the differential buffer amplifier 132, for three exemplary optical frequencies in optical C-band, namely 191.5 THz, 193.5 THz, and 195.5 THz generated using the laser under test 106, is provided as a function of the thermo-optic phase tuner heater voltage. In one non-limiting embodiment, the laser under test 106 is an Agilent N7711A tunable laser source. However, this is not to be construed as limiting the present disclosure as any suitable laser source may be utilized. For example, the laser under test may be any suitable tunable narrow linewidth source and/or local oscillator laser.

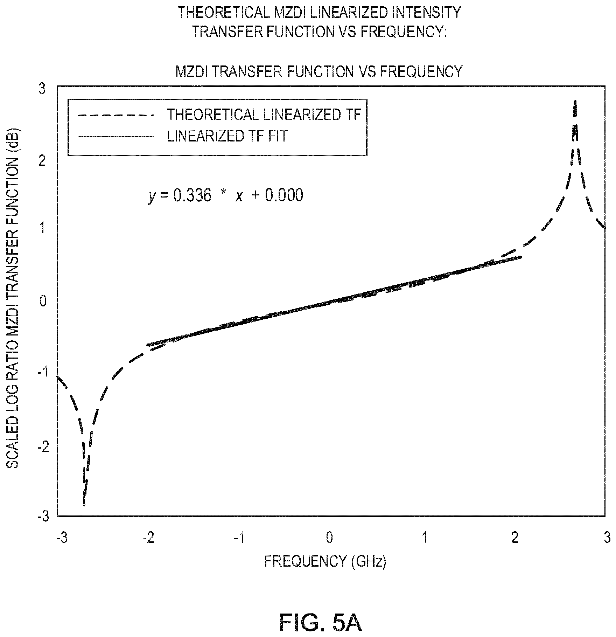

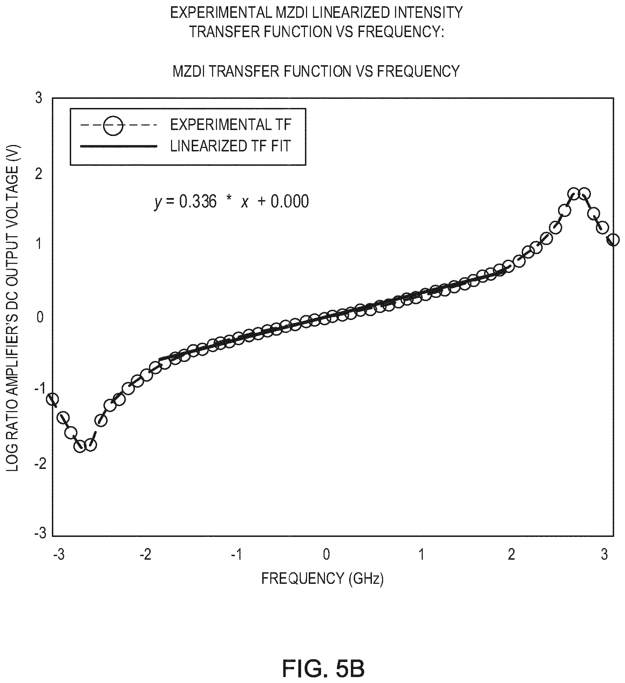

The thermo-optic phase tuner heater voltage of the thermo-optic phase tuner heater 118 is set to correspond to the second null voltage in the linearized MZDI intensity transfer function to bias the MZDI 104 in quadrature phase so that the MZDI 104 has the highest positive frequency discrimination slope in V/GHz. Thereafter, the nominal laser frequency of the laser under test 106 is adjusted in the range of $\pm 3$ GHz in steps of 100 MHz, for example, to remeasure the DC output voltage 134 using the SMU 136 to determine the slope and offset of the linearized MZDI intensity transfer function in V/GHz and V, respectively. With reference to FIGS. 5A and 5B, FIG. 5A is a graph of a theoretically calculated linearized intensity transfer function versus change in laser frequency in GHz of the MZDI 104 using a logarithmic ratio of its two output port intensities and FIG. 5B is a graph of an experimentally measured linearized intensity transfer function of the MZDI 104 using a logarithmic ratio amplifier 128 of its two output port intensities. More specifically, FIG. 5A shows the theoretically expected slope and offset in a linearized MZDI - based optical frequency discriminator simulation while FIG. 5B shows the experimentally measured slope and offset for a linearized MZDI - based optical frequency discriminator having a FSR of 10.7 GHz. As can be seen by comparing FIGS. 5A and 5B, the theoretical and experimentally measured MZDI-based optical frequency discriminator have the same slope of 0.336 V/GHz with no DC output offset voltage and have a nearly one-to-one correspondence.

With continued reference to FIG. 1A, an oscilloscope 138 is provided at an output of the differential buffer amplifier 132 to measure the DC output voltage 134 and obtain time-domain oscilloscope trace data. A processor (not shown) associated with the oscilloscope 138 may be provided to determine a steady state response or a transient response of the laser under test 106 based on the trace data. In some non-limiting embodiments, the processor may be implemented in hardware, software, or a combination of hardware and software. For example, processor may include a processor (e.g., a central processing unit (CPU), a graphics processing unit (GPU), an accelerated processing unit (APU), etc.), a microprocessor, a digital signal processor (DSP), and/or any processing component (e.g., a field-programmable gate array (FPGA), an application-specific integrated circuit (ASIC), a device configured to implement logic functions, etc.) that can be programmed to perform a function. A memory may also be provided and may include random access memory (RAM), read-only memory (ROM), and/or another type of dynamic or static storage memory (e.g., flash memory, magnetic memory, optical memory, etc.) that stores information and/or instructions for use by the processor.

In one non-limiting embodiment, the oscilloscope 138 is a Tektronix TDS3032B oscilloscope that is used to measure and then capture the DC output voltage 134 corresponding to laser frequency variation data. The Tektronix TDS3032B oscilloscope can acquire a waveform trace data with 10,000 sample points and can have different timebase settings depending on the application. The processor associated with the oscilloscope 138 process the trace data to derive laser frequency variation data in GHz by subtracting the offset in Volts and then dividing it by the measured MZDI - based optical frequency discriminator slope in V/GHz determined as described hereinabove.

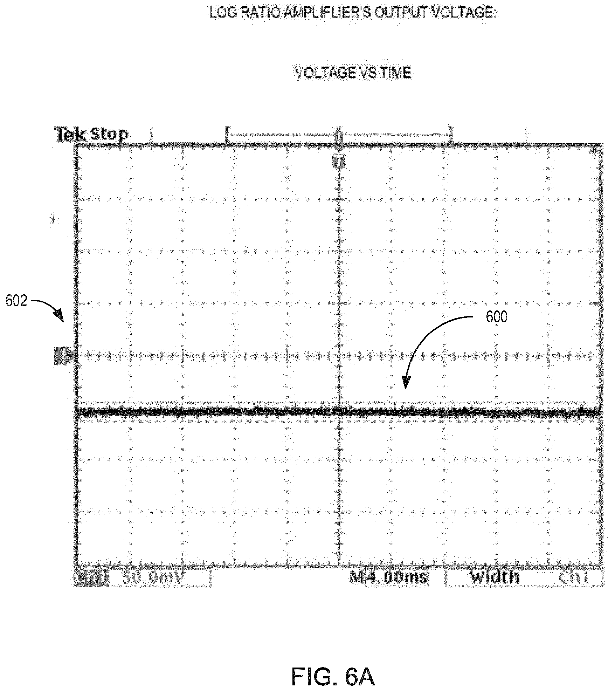

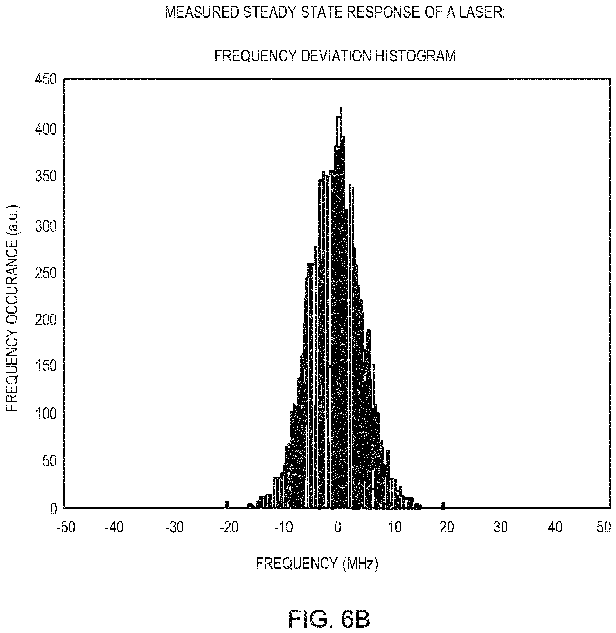

With reference to FIGS. 6A and 6B, trace data 600 of the oscilloscope 138 is captured and analyzed for measuring a steady state response of the laser under test 106. FIG. 6A shows an oscilloscope screenshot 602 of the measured buffered DC output voltage 134 versus time. This trace data 600 is processed digitally by, for example, a MATLAB-based digital signal processor to compute the root-mean-square frequency deviation histogram of the laser frequency variation, shown in FIG. 6B, measured over 40 ms measurement time window with an oscilloscope timebase setting of 4.0 ms/div filtered by the 0.5 Hz cut-off frequency high-pass filter using, for example, a digital signal processing toolbox provided in MATLAB. The steady-state response of the laser under test shows how stable the nominal laser frequency is in THz region with respect to short-term stability over temperature and long-term stability over life of the laser as some applications of narrow linewidth laser sources demand short-term stability while other requires long-term stability and systems and methods, such as discussed above, are needed as a way to measure and report laser stability.

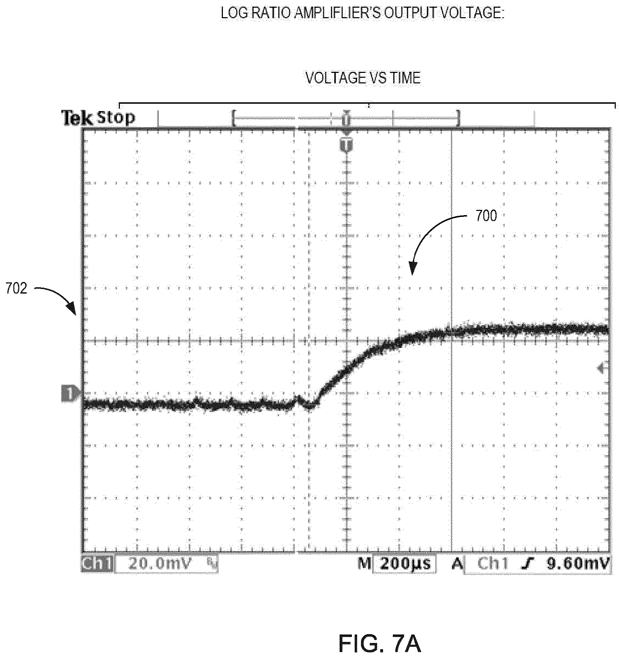

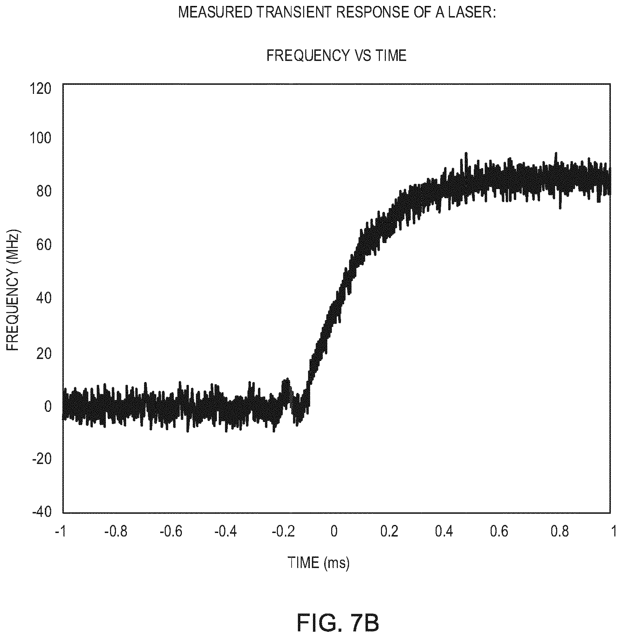

With reference to FIGS. 7A and 7B, trace data 700 of the oscilloscope 138 may also be captured and analyzed for measuring a transient response of the laser under test 106 on a sub-millisecond timescale by introducing an exemplary sub-millisecond risetime step of 80 MHz in a laser nominally lasing at 193.5 THz. FIG. 7A shows an oscilloscope screenshot 702 of the measured buffered DC output voltage 134. This trace data 700 is processed digitally by the processor to resolve the sub-millisecond risetime frequency step of 80 MHz introduced in a laser under test 106 lasing at 193.5 THz, as shown in FIG. 7B, over 2 ms measurement time window with an oscilloscope timebase setting of 200 μs/div. Certain applications of narrow linewidth laser sources require precise shifting of nominal laser frequency in a 100 MHz range or tuning in a GHz range. It is important to determine the tuning speed of the nominal frequency of the narrow linewidth laser sources in certain applications and a need exists to measure it so that the tuning hardware/software that control the narrow linewidth laser sources can be optimized.

The present disclosure provides a versatile method and apparatus based on self-homodyne detection and linearized MZDI - based optical frequency discriminator having high-speed and high-resolution and use it as a "test and measurement solution" to characterize steady state and transient response of a narrow linewidth laser, such as laser 106, as a "device-under-test" using different oscilloscope timebase settings on the oscilloscope 138 during measurement. Such characterizations may include, but are not limited to: a) measuring nominal frequency variations of the laser under test 106 during optimization of "opened" and/or "closed" loop temperature control of the nominal laser frequency in THz; b) resolving the relatively high-speed sub-millisecond risetime frequency steps introduced in the laser frequency in the order of 10 MHz lasing in optical C-band; c) determining and optimizing the tuning speed of laser's fine tune frequency control knob; d) measuring RMS frequency deviation in the laser frequency jitter in steady-state on a millisecond or a second timescale; and e) measure transient response of laser's frequency variations during the fast "Transmitter-Turn-On" and "Transmitter-Turn-Off" in pluggable coherent optical modules in various form factors such, for example, CFP2-ACO, CFP4-ACO, CFP2-DCO, QSFP-DD-DCO, QSFP-28-DCO, OSPF-DCO, etc.

In certain non-limiting embodiments, the optical frequency discriminator 102 may be provided as a pluggable optical module configured to be positioned between the laser 106 and the oscilloscope 138 in various form factors. More specifically, the MZDI 104 along with the thermo-optic phase tuner heater 118 and the first and second photodiodes 120, 122, can be fabricated onto a InP and/or SiP photonic integrated circuit and may be all integrated with the logarithmic ratio amplifier 128, the differential buffer amplifier 132, and the SMU 136 into a pluggable module for field testing. In other non-limiting embodiments, the optical frequency discriminator 102 may be integrated into a device under test such as laser 106. In other non-limiting embodiments, the optical frequency discriminator 102 may be integrated with a reference integrated tunable laser assembly 140 for finding the optimal quadrature bias point of the MZDI 104 and determine its frequency discrimination slope and offset for calibration purpose.

## Claims

1. A method of linearizing an output of an interferometer (104), the method comprising:

   obtaining an optical signal from a laser (106) at an input of the interferometer:
   converting, with a first photodiode (120) connected to an optical through-port (112) of the interferometer and a second photodiode (122) connected to an optical cross-port (116) of the interferometer, a detected optical intensity of the optical signal at the optical through-port and the optical cross-port into two photocurrents (124, 126) using self-homodyne detection at the output of the interferometer;
   **characterized in** the method further comprising:

      providing the two photocurrents to a signal input (302) and a reference input (304), respectively, of a logarithmic ratio amplifier (128) to determine a logarithmic ratio of the two photocurrents;

processing, by the logarithmic ratio amplifier, the logarithmic ratio by scaling the logarithmic ratio and introducing a DC output offset voltage to provide an output voltage (130); and
compensating for the DC output offset voltage using a differential buffer amplifier (132) operatively connected to the output of the logarithmic ratio amplifier to provide a DC output voltage (134) that corresponds to a linearized output of the interferometer

2. The method of claim 1, further comprising:
measuring the DC output voltage with a source-meter unit (136) by tuning a thermo-optic phase tuner heater (118) voltage of the interferometer.

3. The method of claim 2, further comprising:
determining an optimum quadrature bias point of the interferometer based on the measured DC output voltage.

4. The method of claim 3, further comprising:

setting the thermo-optic phase tuner heater voltage to a value based on the optimum quadrature bias point of the interferometer; and
remeasuring the DC output voltage to determine a frequency discrimination slope and offset of the linearized output of the interferometer.

5. The method of claim 1-4, further comprising:
measuring the DC output voltage with an oscilloscope (138) to obtain trace data.

6. The method of claim 5, further comprising:
determining a steady state response of the laser based on a post-processing of the trace data and/ or determining a transient response of the laser based on a post-processing of the trace data.

7. A system (100) for linearizing an output of an interferometer (104), the system comprising:
an interferometer configured to obtain an optical signal from a laser (106) at an input and provide a through-port optical signal to an optical through-port (112) and a cross-port optical signal to an optical cross-port (116) at the output of the interferometer:

a first photodiode (120) connected to the optical through-port of the interferometer and configured to convert the through-port optical signal to a first photocurrent (124);
a second photodiode (122) connected to the optical cross-port of the interferometer and configured to convert the cross-port optical signal to a second photocurrent (126);
**characterized in** the system further comprising:

a logarithmic ratio amplifier (128) comprising a signal input (302) connected to the first photodiode and configured to receive the first photocurrent, a reference input (304) connected to the second photodiode and configured to receive the second photocurrent, and an output, the logarithmic ratio amplifier configured to determine a logarithmic ratio of the first photocurrent and the second photocurrent and process the logarithmic ratio by scaling the logarithmic ratio and introducing a DC output offset voltage to provide an output voltage (130) at the output; and
a differential buffer amplifier (132) connected to the output of the logarithmic ratio amplifier and configured to compensate for the DC output offset voltage to provide a DC output voltage (134) that corresponds to a linearized output of the interferometer.

8. The method of any of claims 1-6 or system of claim 7, wherein the interferometer is a Mach-Zehnder delay interferometer.

9. The method of any of claims 1-6 or system of claim 7 or 8, wherein the DC output voltage corresponds to optical frequency changes above or below a nominal laser frequency of the laser.

10. The method of any of claims 1-6 or system of any of claims 7-9, wherein the laser is a tunable narrow linewidth laser.

11. The system of any of claims 7-10, further comprising:
a source-meter unit (136) operatively connected to the output of differential buffer amplifier and a thermo-optic phase tuner heater (118) of the interferometer and configured to measure the DC output voltage by tuning a thermo-optic phase tuner heater voltage provided to the thermo-optic phase tuner heater.

12. The system of claim 11, wherein the source-meter unit is configured to determine an optimum quadrature bias point of the interferometer based on the measured DC output voltage.

13. The system of claim 12, wherein the source-meter unit is configured to set the thermo-optic phase tuner heater voltage to a value based on the optimum quadrature bias point of the interferometer.

14. The system of claim 13, wherein the system is calibrated to determine a slope in V/GHz and an offset in V based on the optimum quadrature bias point of the interferometer.

15. The system of any of claims 7-14, wherein an oscilloscope (138) is provided at an output of the differential buffer amplifier to measure the DC output voltage and obtain trace data.

16. The system of claim 15, further comprising:
a processor associated with the oscilloscope and configured to determine at least one of a steady state response or a transient response of the laser based on the trace data.

17. The system of any of claims 7-16, wherein the system is provided as a pluggable optical module configured to be positioned between the laser and an oscilloscope.

**Patentansprüche**

1. Verfahren zum Linearisieren einer Ausgabe eines Interferometers (104), wobei das Verfahren umfasst:

Erzielen eines optischen Signals von einem Laser (106) an einem Eingang des Interferometers;
Umwandeln, mit einer ersten Photodiode (120), die mit einem optischen Durchgangsanschluss (112) des Interferometers verbunden ist, und mit einer zweiten Photodiode (122), die mit einem optischen Kreuzanschluss (116) des Interferometers verbunden ist, einer detektierten optischen Intensität des optischen Signals an dem optischen Durchgangsanschluss und dem optischen Kreuzanschluss in zwei Photoströme (124, 126) unter Verwendung einer selbsthomodynen Detektion an dem Ausgang des Interferometers;
**dadurch gekennzeichnet, dass** das Verfahren ferner umfasst:

Bereitstellen der beiden Photoströme jeweils an einem Signaleingang (302) und an einem Referenzeingang (304) eines Verstärkers eines logarithmischen Verhältnisses (128), um ein logarithmisches Verhältnis der beiden Photoströme zu bestimmen;
Verarbeiten, durch den Verstärker des logarithmischen Verhältnisses, des logarithmischen Verhältnisses durch Skalieren des logarithmischen Verhältnisses und Einführen einer Offset-Spannung eines GS-Ausgangs, um eine Ausgangsspannung (130) bereitzustellen; und
Kompensieren für die Offset-Spannung des GS-Ausgangs unter Verwendung eines Differentialtrennverstärkers (132), der betriebsfähig mit dem Ausgang des Verstärkers des logarithmischen Verhältnisses verbunden ist, um eine GS-Ausgangsspannung (134) bereitzustellen, die einer linearisierten Ausgabe des Interferometers entspricht.

2. Verfahren nach Anspruch 1, ferner umfassend:
Messen der GS-Ausgangsspannung mit einer Source-Meter-Einheit (136) durch Abstimmen einer Spannung eines thermooptischen Phasentuner-Heizelements (118) des Interferometers.

3. Verfahren nach Anspruch 2, ferner umfassend:
Bestimmen eines optimalen Quadraturarbeitspunktes des Interferometers basierend auf der gemessenen GS-Ausgangsspannung.

4. Verfahren nach Anspruch 3, ferner umfassend:

Einstellen der Spannung des thermooptischen Phasentuner-Heizelements auf einen Wert, der auf dem optimalen Quadraturarbeitspunkt des Interferometers basiert; und

erneutes Messen der GS-Ausgangsspannung, um eine Frequenztrennungsflankensteilheit und ein Offset der linearisierten Ausgabe des Interferometers zu bestimmen.

5. Verfahren nach Anspruch 1 bis 4, ferner umfassend:
Messen der GS-Ausgangsspannung mit einem Oszilloskop (138), um Trace-Daten zu erzielen.

6. Verfahren nach Anspruch 5, ferner umfassend:
Bestimmen einer Dauerzustandsreaktion des Lasers basierend auf einer Nachbehandlung der Trace-Daten, und/oder Bestimmen einer transienten Reaktion des Lasers basierend auf einer Nachbehandlung der Trace-Daten.

7. System (100) zum Linearisieren einer Ausgabe eines Interferometers (104), wobei das System umfasst:

ein Interferometer, das dazu konfiguriert ist, ein optisches Signal von einem Laser (106) an einem Eingang zu erzielen und ein optisches Durchgangsanschlusssignal für einen optischen Durchgangsanschluss (112) und ein optisches Kreuzanschlusssignal für einen optischen Kreuzanschluss (116) an dem Ausgang des Interferometers bereitzustellen,
eine erste Photodiode (120), die mit dem optischen Durchgangsanschluss des Interferometers verbunden ist und dazu konfiguriert ist, das optische Durchgangsanschlusssignal in einen ersten Photostrom (124) umzuwandeln,
eine zweite Photodiode (122), die mit dem optischen Kreuzanschluss des Interferometers verbunden ist und dazu konfiguriert ist, das optische Kreuzanschlusssignal in einen zweiten Photostrom (126) umzuwandeln;
**dadurch gekennzeichnet, dass** das System ferner umfasst:

einen Verstärker des logarithmischen Verhältnisses (128), der einen Signaleingang (302), der mit der ersten Photodiode verbunden ist und dazu konfiguriert ist, den ersten Photostrom zu empfangen, einen Referenzeingang (304), der mit der zweiten Photodiode verbunden ist und dazu konfiguriert ist, den zweiten Photostrom zu empfangen, und einen Ausgang umfasst, wobei der Verstärker des logarithmischen Verhältnisses dazu konfiguriert ist, ein logarithmisches Verhältnis des ersten Photostroms und des zweiten Photostroms zu bestimmen und das logarithmische Verhältnis durch Skalieren des logarithmischen Verhältnisses und Einführen einer Offset-Spannung eines GS-Ausgangs zu verarbeiten, um eine Ausgangsspannung (130) an dem Ausgang bereitzustellen; und
einen Differentialtrennverstärker (132), der mit dem Ausgang des Verstärkers des logarithmischen Verhältnisses verbunden ist und dazu konfiguriert ist, für die Offset-Spannung des GS-Ausgangs zu kompensieren, um eine GS-Ausgangsspannung (134) bereitzustellen, die einer linearisierten Ausgabe des Interferometers entspricht.

8. Verfahren nach einem der Ansprüche 1 bis 6 oder System nach Anspruch 7, wobei das Interferometer ein Mach-Zehnder-Verzögerungsinterferometer ist.

9. Verfahren nach einem der Ansprüche 1 bis 6 oder System nach Anspruch 7 oder 8, wobei die GS-Ausgangsspannung Änderungen der optischen Frequenz über oder unter einer nominellen Laserfrequenz des Lasers entspricht.

10. Verfahren nach einem der Ansprüche 1 bis 6 oder System nach einem der Ansprüche 7 bis 9, wobei der Laser ein abstimmbarer Laser mit schmaler Linienbreite ist.

11. System nach einem der Ansprüche 7 bis 10, ferner umfassend:
eine Source-Meter-Einheit (136), die betriebsfähig mit dem Ausgang des Differentialtrennverstärkers und einem thermooptischen Phasentuner-Heizelement (118) des Interferometers verbunden ist und dazu konfiguriert ist, die GS-Ausgangsspannung durch Abstimmen einer Spannung des thermooptischen Phasentuner-Heizelements, die dem thermooptischen Phasentuner-Heizelement bereitgestellt wird, zu messen.

12. System nach Anspruch 11, wobei die Source-Meter-Einheit dazu konfiguriert ist, einen optimalen Quadraturarbeitspunkt des Interferometers basierend auf der gemessenen GS-Ausgangsspannung zu bestimmen.

13. System nach Anspruch 12, wobei die Source-Meter-Einheit dazu konfiguriert ist, die Spannung des thermooptischen Phasentuner-Heizelements auf einen Wert einzustellen, der auf dem optimalen Quadraturarbeitspunkt des Interferometers basiert.

14. System nach Anspruch 13, wobei das System dazu kalibriert ist, eine Flankensteilheit in V/GHz und ein Offset in V basierend auf dem optimalen Quadraturarbeitspunkt des Interferometers zu bestimmen.

15. System nach einem der Ansprüche 7 bis 14, wobei ein Oszilloskop (138) an einem Ausgang des Differentialtrennverstärkers bereitgestellt wird, um die GS-Ausgangsspannung zu messen und Trace-Daten zu erzielen.

16. System nach Anspruch 15, ferner umfassend:
einen Prozessor, der dem Oszilloskop zugeordnet ist und dazu konfiguriert ist, mindestens eine von einer Dauerzustandsreaktion oder einer transienten Reaktion des Lasers basierend auf den Trace-Daten zu bestimmen.

17. System nach einem der Ansprüche 7 bis 16, wobei das System als ein einsteckbares optisches Modul bereitgestellt wird, das dazu konfiguriert ist, zwischen dem Laser und einem Oszilloskop positioniert zu sein.


**Revendications**

1. Procédé permettant de linéariser une sortie d'un interféromètre (104), le procédé comprenant les étapes consistant à :

obtenir un signal optique d'un laser (106) au niveau d'une entrée de l'interféromètre ;
convertir, à l'aide d'une première photodiode (120) connectée à un port optique traversant (112) de l'interféromètre et d'une deuxième photodiode (122) connectée à un port optique croisé (116) de l'interféromètre, une intensité optique détectée du signal optique au niveau du port optique traversant et du port optique croisé en deux courants photoélectriques (124, 126) en utilisant une détection auto-homodyne au niveau de la sortie de l'interféromètre ;
**caractérisé en ce que** le procédé comprend en outre les étapes consistant à :

fournir les deux courants photoélectriques à une entrée de signal (302) et à une entrée de référence (304), respectivement, d'un amplificateur de rapport logarithmique (128) pour déterminer un rapport logarithmique des deux courants photoélectriques ;
traiter, par l'amplificateur de rapport logarithmique, le rapport logarithmique par une mise à l'échelle du rapport logarithmique et l'introduction d'une tension offset de sortie CC pour fournir une tension de sortie (130) ; et
compenser pour la tension offset de sortie CC en utilisant un amplificateur séparateur différentiel (132) connecté de manière opérationnelle à la sortie de l'amplificateur de rapport logarithmique pour fournir une tension de sortie CC (134) qui correspond à une sortie linéarisée de l'interféromètre.

2. Procédé selon la revendication 1, comprenant en outre :
la mesure de la tension de sortie CC à l'aide d'une unité source-mètre (136) en accordant une tension d'un élément chauffant d'accordeur de phase thermo-optique (118) de l'interféromètre.

3. Procédé selon la revendication 2, comprenant en outre :
la détermination d'un point de polarisation de quadrature optimal de l'interféromètre sur la base de la tension de sortie CC mesurée.

4. Procédé selon la revendication 3, comprenant en outre :

le réglage de la tension de l'élément chauffant d'accordeur de phase thermo-optique sur une valeur basée sur le point de polarisation de quadrature optimal de l'interféromètre ; et
la nouvelle mesure de la tension de sortie CC pour déterminer une pente de discrimination de fréquence et un offset de la sortie linéarisée de l'interféromètre.

5. Procédé selon la revendication 1 à 4, comprenant en outre :
la mesure de la tension de sortie CC à l'aide d'un oscilloscope (138) pour obtenir des données de trace.

6. Procédé selon la revendication 5, comprenant en outre :

la détermination d'une réponse d'état permanent du laser sur la base d'un post-traitement des données de trace et/ou
la détermination d'une réponse transitoire du laser sur la base d'un post-traitement des données de trace.

**7.** Système (100) permettant de linéariser une sortie d'un interféromètre (104), le système comprenant :

un interféromètre configuré pour obtenir un signal optique d'un laser (106) au niveau d'une entrée et fournir un signal optique de port traversant à un port optique traversant (112) et un signal optique de port croisé à un port optique croisé (116) au niveau de la sortie de l'interféromètre,
une première photodiode (120) connectée au port optique traversant de l'interféromètre et configurée pour convertir le signal optique de port traversant en un premier courant photoélectrique (124) ;
une deuxième photodiode (122) connectée au port optique croisé de l'interféromètre et configurée pour convertir le signal optique de port croisé à un deuxième courant photoélectrique (126) ;
**caractérisé en ce que** le système comprend en outre :

un amplificateur de rapport logarithmique (128) comprenant une entrée de signal (302) connectée à la première photodiode et configurée pour recevoir le premier courant photoélectrique, une entrée de référence (304) connectée à la deuxième photodiode et configurée pour recevoir le deuxième courant photoélectrique, et une sortie, l'amplificateur de rapport logarithmique étant configuré pour déterminer un rapport logarithmique du premier courant photoélectrique et du deuxième courant photoélectrique pour traiter le rapport logarithmique par une mise à l'échelle du rapport logarithmique et l'introduction d'une tension offset de sortie CC pour fournir une tension de sortie (130) au niveau de la sortie ; et
un amplificateur séparateur différentiel (132) connecté à la sortie de l'amplificateur de rapport logarithmique et configuré pour compenser pour la tension offset de sortie CC pour fournir une tension de sortie CC (134) qui correspond à une sortie linéarisée de l'interféromètre.

**8.** Procédé selon l'une quelconque des revendications 1 à 6 ou système selon la revendication 7, dans lequel l'interféromètre est un interféromètre à retard de Mach-Zehnder.

**9.** Procédé selon l'une quelconque des revendications 1 à 6 ou système selon la revendication 7 ou 8, dans lequel la tension de sortie CC correspond à des changements de fréquence optique au-dessus ou au-dessous d'une fréquence laser nominale du laser.

**10.** Procédé selon l'une quelconque des revendications 1 à 6 ou système selon l'une quelconque des revendications 7 à 9, dans lequel le laser est un laser accordable à largeur de ligne étroite.

**11.** Système selon l'une quelconque des revendications 7 à 10, comprenant en outre :
une unité source-mètre (136) connectée de manière opérationnelle à la sortie de l'amplificateur séparateur différentiel et à un élément chauffant d'accordeur de phase thermo-optique (118) de l'interféromètre et configurée pour mesurer la tension de sortie CC en accordant une tension d'un élément chauffant d'accordeur de phase thermo-optique fournie à l'élément chauffant d'accordeur de phase thermo-optique.

**12.** Système selon la revendication 11, dans lequel l'unité source-mètre est configurée pour déterminer un point de polarisation de quadrature optimal de l'interféromètre sur la base de la tension de sortie CC mesurée.

**13.** Système selon la revendication 12, dans lequel l'unité source-mètre est configurée pour régler la tension de l'élément chauffant d'accordeur de phase thermo-optique sur une valeur basée sur le point de polarisation de quadrature optimal de l'interféromètre.

**14.** Système selon la revendication 13, dans lequel le système est calibré pour déterminer une pente en V/GHz et un offset en V sur la base du point de polarisation de quadrature optimal de l'interféromètre.

**15.** Système selon l'une quelconque des revendications 7 à 14, dans lequel un oscilloscope (138) est fourni au niveau d'une sortie de l'amplificateur séparateur différentiel pour mesurer la tension de sortie CC et pour obtenir des données de trace.

**16.** Système selon la revendication 15, comprenant en outre :
un processeur associé à l'oscilloscope et configuré pour déterminer au moins l'une d'une réponse d'état permanent ou d'une réponse transitoire du laser sur la base des données de trace.

**17.** Système selon l'une quelconque des revendications 7 à 16, dans lequel le système est fourni sous la forme d'un module optique enfichable configuré pour être positionner entre le laser et un oscilloscope.

FIG. 1A

FIG. 1B

FIG. 2

FIG. 3

$$VOUT = 0.5 \log_{10}\left(\frac{I_{PD1}}{I_{PD2}}\right) + 2$$

MZDI TRANSFER FUNCTION VS PHASE TUNER HEATER VOLTAGE

FIG. 4

THEORETICAL MZDI LINEARIZED INTENSITY
TRANSFER FUNCTION VS FREQUENCY:

MZDI TRANSFER FUNCTION VS FREQUENCY

FIG. 5A

EXPERIMENTAL MZDI LINEARIZED INTENSITY
TRANSFER FUNCTION VS FREQUENCY:

MZDI TRANSFER FUNCTION VS FREQUENCY

$y = 0.336 * x + 0.000$

FIG. 5B

LOG RATIO AMPLIFLIER'S OUTPUT VOLTAGE:

VOLTAGE VS TIME

FIG. 6A

MEASURED STEADY STATE RESPONSE OF A LASER:

FREQUENCY DEVIATION HISTOGRAM

FIG. 6B

LOG RATIO AMPLIFLIER'S OUTPUT VOLTAGE:

VOLTAGE VS TIME

FIG. 7A

MEASURED TRANSIENT RESPONSE OF A LASER:

FREQUENCY VS TIME

FIG. 7B

## REFERENCES CITED IN THE DESCRIPTION

**Patent documents cited in the description**

- US 2021211202 A
- US 2010245968 A

- CN 113376923